# EUROPEAN PATENT SPECIFICATION

(11) **EP 0 455 346 B1**
(45) Date of publication and mention of the grant of the patent: **11.06.1997**
(21) Application number: 91302827.0
(22) Date of filing: 28.03.1991
(51) Int. Cl.: C21D 9/14, B62D 55/205

(54) **Production method for a vehicular endless track bushing**
Verfahren zur Herstellung von Gleiskettenbuchsen für Raupenkettenfahrzeuge
Procédé de fabrication de douilles pour patins de chenille de véhicules chenillées

(30) Priority: 31.03.1990 JP 83009/90
(43) Date of publication of application: 06.11.1991
(73) Proprietor: TOPY KOGYO KABUSHIKI KAISHA, Tokyo 102 (JP)
(72) Inventor: Nakajima, Masahiro c/o Topy Kogyo K.K., Tokyo 102 (JP); Kusano, Hisahiko c/o Topy Kogyo K.K., Tokyo 102 (JP); Yoshida, Isao c/o Topy Kogyo K.K., Tokyo 102 (JP); Hamajima, Yoshio c/o Topy Kogyo K.K., Tokyo 102 (JP); Takeno, Hiroyuki c/o Topy Kogyo K.K., Tokyo 102 (JP)
(74) Representative: Paget, Hugh Charles Edward

(56) References cited:
- EP-A- 0 079 864
- EP-A- 0 339 152
- PATENT ABSTRACTS OF JAPAN, vol. 8, no. 24 (C-208)[1461], 2nd February 1984; & JP-A-58 189 327 (KOMATSU SEISAKUSHO) 05-11-1983
- PATENT ABSTRACTS OF JAPAN, vol. 14, no. 250 (C-723)[4193], 29th May 1990; & JP-
- A-2 70 022 (TOPY IND.) 08-03-1990
- PATENT ABSTRACTS OF JAPAN, vol. 12, no. 353 (C-530)[3200], 21st September 1988; & JP-A-63 109 119 (TOPY IND.) 13-05-1988

## Description

The present invention relates to a production method for a bushing used in an endless track mounted to vehicles.

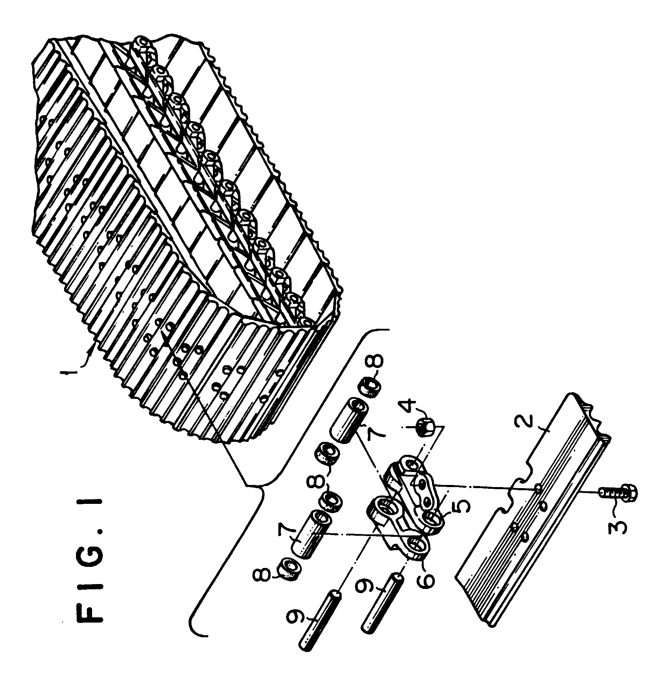

An endless track adapted to be mounted to vehicles (for example, a bulldozer) includes, as shown in FIG. 1, a shoe 2, shoe connecting bolts 3, shoe connecting nuts 4, links 5 and 6, bushings 7, dust seals 8, and pins 9 as one structural unit thereof.

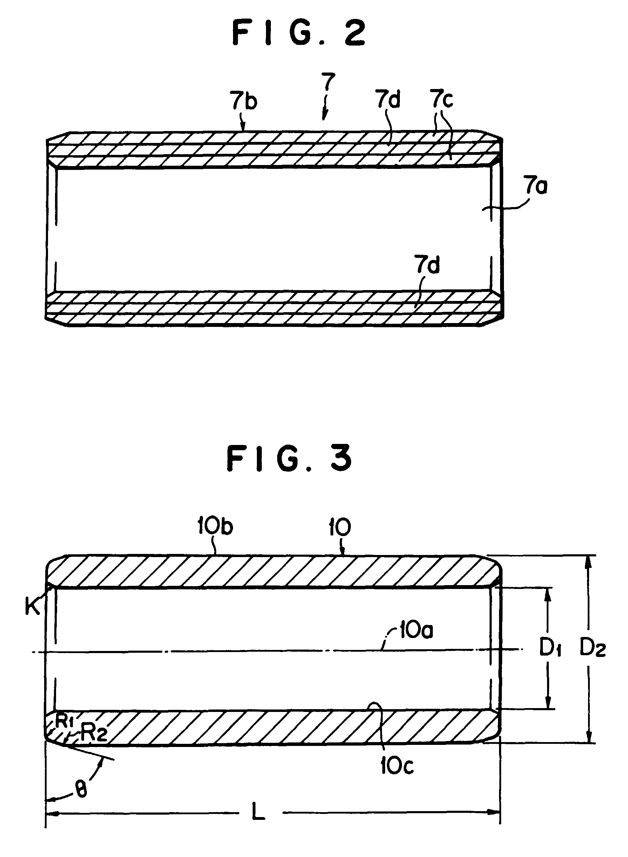

The bushing 7 used for an endless track is shown in FIG. 2 in an enlarged manner. For the endless track bushing, abrasion resistance is required at an inside surface 7a, an outside surface 7b and wall portions 7c adjacent the surfaces 7a and 7b, and strength and toughness are required at a core portion 7d of the wall to endure a load imposed on the bushing.

To satisfy those requirements, the following production methods of an endless track bushing have been proposed:
(a) A production method as proposed in Japanese Patent Publication SHO 52-34806, wherein case hardening steel (JIS (Japanese Industrial Standard): SCM415), which is a low-carbon steel, is selected as the bushing material. The bushing material is carburized at portions near the surfaces thereof and is cooled in the furnace. Then, the bushing material is heated and quenched by oil, and then, the bushing material is tempered. The required abrasion-resistance at the surfaces is obtained through the carburizing, and the required strength and toughness at the core portion are obtained through the quenching and tempering. This method will be called a first related art hereinafter.
(b) A production method as proposed in Japanese Patent Publication HEI 1-259129 published October 16, 1989 (Japanese Patent Application SHO 63-87338) and as shown in FIG. 3. In the method, a bushing material 10 of medium-carbon steel is carburized, and then the bushing material is cooled to an ambient temperature. Then, the bushing material is induction-hardened beyond an outer carburized layer from an outside surface 10b thereof while the bushing material 10 is rotated about an axis 10a thereof whereby an outer effective hardened layer having a hardness greater than a specified effective hardness is formed. Then, the bushing material is induction-hardened beyond an inner carburized layer from an inside surface 10c thereof while the bushing material 10 is rotated about the axis 10a and the outside surface is cooled by a coolant whereby an inner effective hardened layer having a hardness greater than the specified effective hardness is formed and a tempered layer having a hardness less than the specified effective hardness is formed between the inner and outer effective hardened layer. Finally, the bushing is tempered at low temperatures. This method will be called a second related art hereinafter.
(c) A production method as proposed in Japanese Patent Application SHO 63-320420 (Japanese Patent Publication HEI 2-169375), wherein a bushing material of medium-carbon steel is carburized and then cooled to an ambient temperature. Then, the bushing material is induction-heated from an outside surface of the bushing material only so that an entire cross-section of a wall of the bushing material is heated, and then is quenched by cooling. Lastly, the bushing material is tempered. This method will be called a third related art hereinafter.

Among these methods, the first related art is now used in the field.

However, the first related art is relatively expensive as it takes a long time to carburize the bushing material because the case hardening steel is a low-carbon steel. The problem with the second related art is that it requires two steps in the induction hardening because the bushing material is first induction-hardened from the outside surface thereof and then from the inside surface thereof. Therefore, the hardening time is long. The problem with the third related art is that it is relatively expensive and it takes a relatively long time for heat treatment because carburizing is necessary.

EP 0339152 discloses a heat treatment process in which a bushing of medium carbon steel is induction heated, cooled and tempered.

The object of the invention is to overcome or reduce the disadvantages explained above.

By the invention it is possible to provide a production method for an endless track bushing wherein carburizing can be eliminated as compared with the first through third related arts and an induction-hardening step is reduced as compared with the second related art and wherein in spite of the deletion of carburizing and the reduction of the induction-hardening step, abrasion-resistance quality at surfaces, and strength and toughness at a core portion are maintained to the same order as those of the first through third related arts.

According to the present invention, there is provided a production method for a vehicular endless track bushing as described in claim 1. The inside surface of the bushing material is preferably heated within 50°C of the transformation temperature.

The present invention overcomes the problems of the known methods. Since the present invention uses high-carbon steel (C: 0.5-1.0% by weight) for the material of the bushing, carburizing is not needed. More particularly, in the conventional methods of using low or medium-carbon steel for the material of the bushing, carburizing was necessary to increase the carbon content at surfaces of the bushing materials from the content of 0.1-0.4% by weight to the content of about 0.8% by weight. However, in the present invention, since the material itself has the same carbon content as is required at the surface of the bushing material, the carburizing process can be eliminated. As a result, the heat-treatment cost and time can be reduced. Further, since the entire cross-section of the wall of the bushing material is induction-heated and cooled from the outside surface only, the induction-hardening step is reduced to one half of the second related art where the bushing material is induction-hardened first from the outside surface and then from the inside surface thereof.

The above and other optional features and advantages of the present invention will become apparent and will be more readily appreciated from the following detailed description of the preferred exemplary embodiment of the invention taken in conjunction with the accompanying drawings, in which:
FIG. 1 is a perspective view of a portion of an endless track and the components thereof;
FIG. 2 is a longitudinal cross-sectional view of a bushing heat-treated according to the first or second related art;
FIG. 3 is a longitudinal cross-sectional view of a bushing heat-treated according to the present invention or the first to third related arts wherein the bushing material is denoted with various dimensional references for defining the configuration of the bushing material;
FIG. 4 is a graph illustrating distributions of carbon quantity in walls of the bushing materials produced according to the present invention and the first to third related arts;
FIG. 5 is a graph illustrating a hardness distribution in a wall of a bushing heat-treated according to the first related art;
FIG. 6 is a graph illustrating a hardness distribution in a wall of a bushing heat-treated according to the second related art;
FIG. 7 is a graph illustrating a hardness distribution in a wall of a bushing heat-treated according to the third related art;
FIG. 8 is a graph illustrating a hardness distribution in a wall of a bushing heat-treated according to the present invention;
FIG. 9A is a front elevational view of a crushing test rig; and
FIG. 9B is a side elevational view of the test rig of FIG. 9A.

A preferred embodiment of the invention will now be explained.

FIG. 3 illustrates a bushing material 10 to which the production method of the present invention is applied. The bushing material 10 has a length L of 158 mm, an outer diameter DI of 66.7 mm, an inner diameter D2 of 44.8 mm, an outside surface end taper θ of 80°, a taper corner having a radius R1, R2 of 2 mm, and an inside surface end chamfer K of 2 mm.

The bushing material to be used in the production method of the present invention should comprise high-carbon low-alloy steel having 0.5-1.0% carbon by weight. The high-carbon steel includes 1.0-2.0% manganese by weight, 0.1-1.2% chromium by weight, less than 0.35% molybdenum by weight, and 0.0005-0.0030% boron by weight. The above-defined contents of manganese, chromium and molybdenum are determined to ensure hardenability, and the above-defined content of boron is determined to obtain abrasion-resistance. The high-carbon low-alloy steel should include boron and at least one of manganese, chromium and molybdenum. Table 1 shows the chemical composition of the high-carbon low-alloy steel suitable for use in the method according to the present invention. For reference, Table 1 also shows the chemical compositions of JIS SCM415 which was used in the first related art and of steel defined as ASCB40H according to the Japanese Automobile Industry Association Standard which was used in the second and third related arts.

**Table 1**

| Chemical Component | JIS: SCM415 (first related art) | Steel Material ASCB40H (second and third related arts) | high-carbon low-alloy steel (the present invention) |
|---|---|---|---|
| C | 0.16 (wt %) | 0.40 (wt %) | 0.80 (wt %) |
| Si | 0.24 | 0.19 | 0.26 |
| Mn | 0.65 | 0.71 | 1.60 |
| P | 0.018 | 0.029 | 0.022 |
| S | 0.004 | 0.010 | 0.019 |
| Ni | 0.02 | 0.05 | 0.06 |
| Cr | 0.98 | 0.90 | 0.17 |
| Cu | 0.02 | 0.08 | 0.09 |
| Mo | 0.21 | 0.02 | 0.02 |
| Al | 0.032 | 0.018 | 0.033 |
| Ti | - | 0.034 | 0.035 |
| B | - | 0.0013 | 0.0018 |

The bushing material having the above-described composition is heat-treated according to the heat-treatment specifications shown in Table 2. Table 2 shows the heat-treatment specifications of the first through third related arts for comparison.

**Table 2**

| Material | Method | Heat treatment | Details |
|---|---|---|---|
| SCM415 | first related art | carburizing | 950°C x 22 hours cooling in a furnace |
| | | quench-hardening | heating to 850°C and cooled by oil |
| | | tempering | 200°C |
| ASCB40H | second related art | carburizing | 950°C x 11 hours cooling in a furnace |
| | | quench-hardening | induction-hardening from the outside surface and them from the inside surface |
| | | tempering | 200°C |
| ASCB40H | third related art | carburizing | 950°C x 11 hours cooling in a furnace |
| | | quench-hardening | induction-hardening the entire wall from the outside surface |
| | | tempering | 200°C |
| high-carbon low-alloy steel | the present invention | quench-hardening | induction-hardening the entire wall from the outside surface only |
| | | tempering | 150-250°C |

The specification of the high frequency induction hardening of Table 2 is shown in more detail in Table 3. Table 3 also shows the second and third related arts for comparison.

**Table 3**

| Specification | Second related art | | Third related art | The present invention |
|---|---|---|---|---|
| Hardening | From outside surface | From inside surface | From outside surface only throughout entire thickness | From outside surface only throughout entire thickness |
| Frequency (KHz) | 3 | 20 | 3 | 1 |
| Output (KW) | 121 | 82 | 121 | 144 |
| Moving speed (mm/sec) | 8.4 | 6.5 | 7.6 | 9.5 |
| Coolant | Water soluble | Water soluble | Water soluble | Water soluble |

The heat-treatment method according to the present invention comprises a method wherein the ASCB40H steel is replaced by high-carbon low-alloy steel having 0.5-1.0% carbon by weight and the carburizing process is eliminated from the heat-treatment in the third related art. The heat-treatment of the present invention includes induction-heating the bushing material from the outside surface only so that the inside surface is heated to a temperature above and close to the Ac₃ transformation temperature or to a temperature above and close to the Ac₁ transformation temperature and quenching an entire cross-section of the wall of the bushing material by cooling from the outside surface only, and then tempering the bushing material.

The bushing materials having the chemical compositions shown in Table 1 were heat-treated according to the specifications shown in Table 2 and Table 3. The bushing material which has been heat-treated will hereinafter be called a bushing.

The heat-treatment results, that is, the cross-section hardnesses of the bushings heat-treated according to the above-described specifications will be explained in detail below.

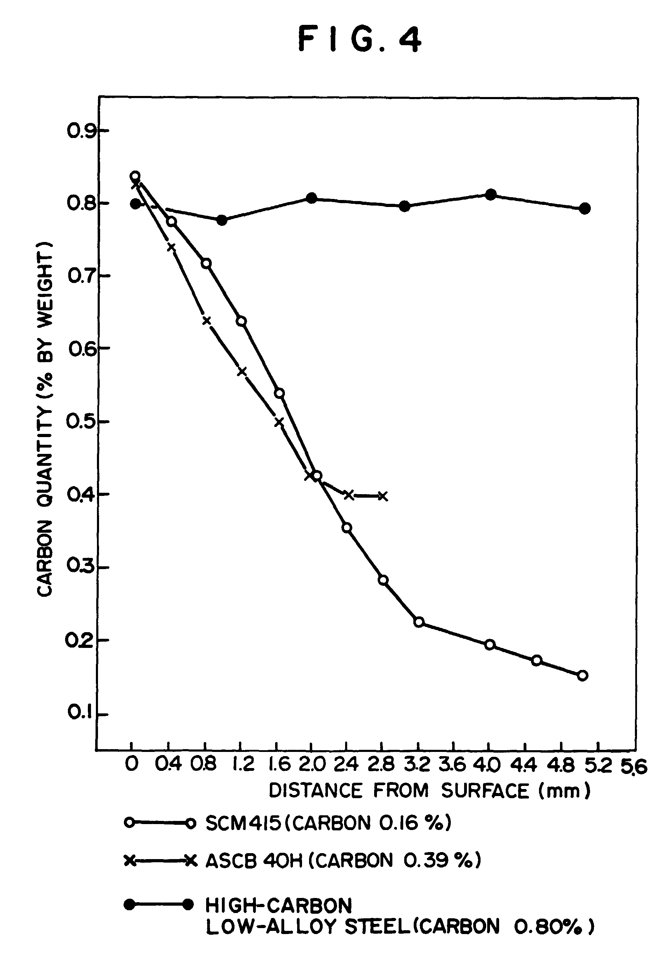

FIG. 4 illustrates the carbon quantity included in the carburized layer of the bushings heat-treated according to the carburizing methods of the first through third related arts and measured by an X-ray micro-analyzer and the carbon quantity included in the bushing material of the present invention. As seen in FIG. 4, when it is defined that a carbon quantity to be included in an effective carburized layer is at least 0.4% by weight, the effective carburized layer of the bushing produced according to the first related art has 2.2 mm depth and the effective carburized layer of the bushing produced according to the second and third related arts has 2.4 mm depth. In contrast, in the present invention, the carbon content is more than 0.5% by weight throughout the entire thickness of the wall of the bushing. Therefore, the entire thickness is deemed to be carburized.

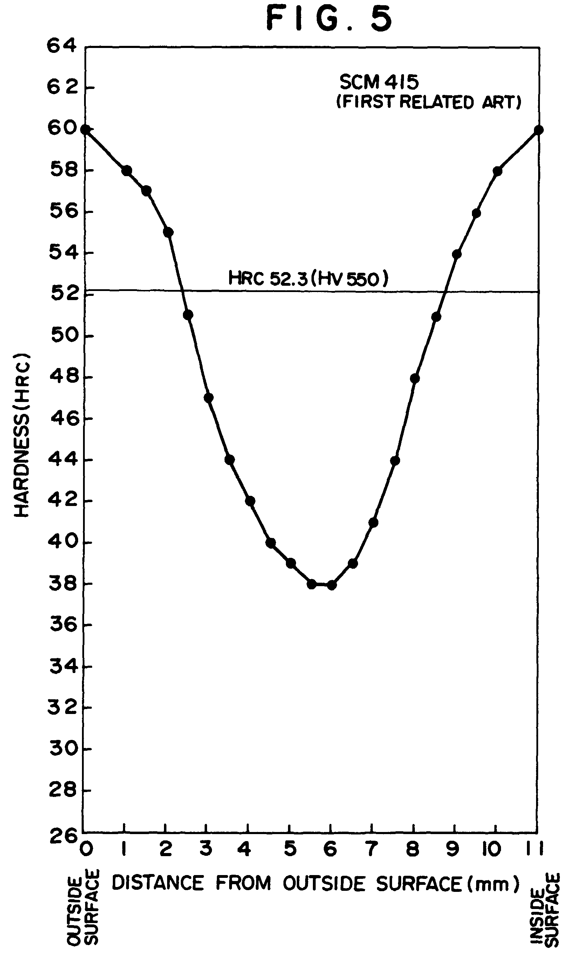

FIGS. 5-8 illustrate hardness distributions in the walls of the bushings produced according to the first through third related arts and the present invention, respectively.

As seen in FIG. 5, the depth of the effective hardness layer of the bushing heat-treated according to the method of the first related art is 2.3-2.4 mm, when an effective hardness layer is defined as a layer having a hardness greater than Rockwell Hardness C-Scale 52.3 (Vickers Hardness Scale 550) according to JIS (Japanese Industrial Standard). The effective hardness layer depth is substantially equal to the 2.2 mm depth of the carburized layer having at least 0.4% carbon by weight.

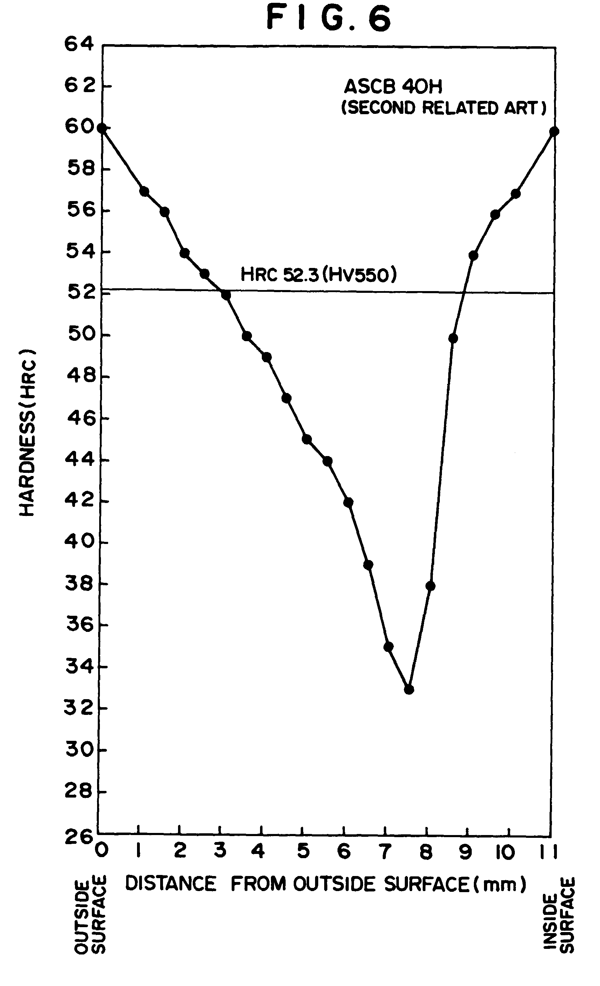

As seen in FIG. 6, the depth of the effective hardness layer of the bushing heat-treated according to the method of the second related art is 2.2 mm at the inside surface portion thereof and 2.8 mm at the outside surface portion thereof. The depth of the effective hardness layer at the outside surface portion is slightly greater than the 2.4 mm depth of the carburized layer having at least 0.4% carbon by weight. This means that hardening effect due to heating extends beyond the carburized layer obtained in the carburizing of a bushing made from medium-carbon steel. This effect can be seen in FIG. 6.

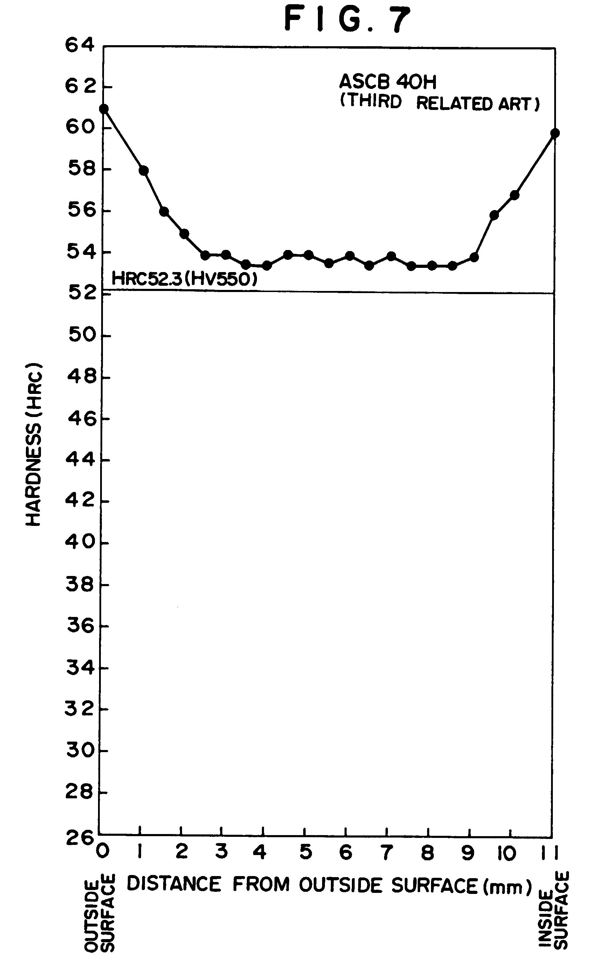

As seen in FIG. 7, the entire cross-section of the wall of the bushing heat-treated according to the third related art is hardened to a hardness greater than HRC 52.3, though the carburized layer of the bushing heat-treated according to the method of the third related art is of substantially the same order as that of bushing heat-treated according to the method of the second related art.

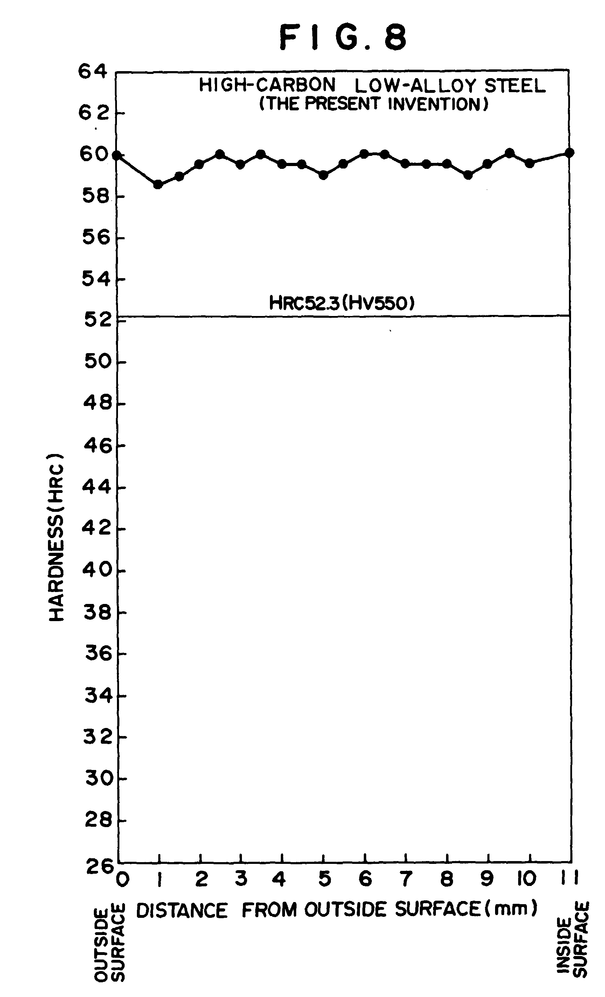

As seen in FIG. 8, the entire cross-section of the wall of the bushing heat-treated according to the present invention has a constant hardness of about HRC 60. The present invention is similar to the third related art in that the entire wall is hardened to a hardness greater than HRC 52.3, but the present invention differs from the third related art in that the core portion has substantially the same hardness as that of the surface portion in the present invention while the core portion has a lower hardness (lower by HRC 6-7) than that of the surface portion in the third related art. As a result, the bushing produced according to the method of the present invention has a further improved abrasion-proof characteristic as compared to the third related art.

Comparing the hardness of the surface portion of the bushing produced according to the method of the present invention with that of the bushings produced according to the first and second related arts, there is no great difference in hardness between them. However, the hardness of the core portions of the bushings of the first and second related arts is much lower than the hardness of the surface portions, while the hardness of the core portion of the bushing produced according to the method of the present invention is substantially equal to that of the surface portion. Therefore, the abrasion-proof characteristic of the bushing produced according to the present invention is much greater than that of the bushings produced according to the first and second related arts.

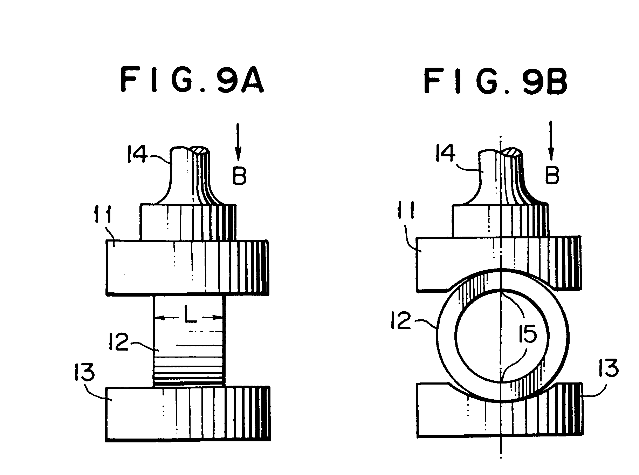

FIG. 9 illustrates a crushing test rig. In the crushing test, the test piece 12 was prepared by cutting the bushing having the configuration shown in FIG. 3 to a length L of 30 mm. The length of the test piece was determined from the capacity of the test rig and had no other technical meaning. The members denoted by reference numerals 11 and 13 are compressors to compress the test piece 12 therebetween. Member 13 is stationary while member 11 compresses in a direction shown by arrow B. The test rigs 11 and 13 were mounted to a compression force loading machine and a load was added in the direction B to cause a crack in the test piece at positions 15. A crushing load was defined as a maximum load before the crack initiated. A crushing deformation was defined as a deformation of the test piece at the time when the maximum load was loaded. Table 4 illustrates the test results.

**Table 4**

| Test piece | Crushing load (ton) | Crushing deformation (mm) |
|---|---|---|
| SCM415 first related art | 5.3 - 12.8 | 0.60 - 1.20 |
| ASCB40H second related art | 10.4 - 17.0 | 1.05 - 1.60 |
| ASCB40H third related art | 12.8 - 22.4 | 0.95 - 2.30 |
| high-carbon steel low-alloy the present invention | 7.7 - 12.4 | 0.75 - 1.20 |

As seen in Table 4, the bushing heat-treated according to the method of the present invention has substantially the same crushing load and deformation as those of the bushing heat-treated according to the method of the first related art, though the crushing load and deformation are inferior to those of the bushings heat-treated according to the methods of the second and third related arts. Since the first related art has been actually used in the field and has caused no problem from the viewpoint of crushing load and deformation, it can be understood that the method of the present invention will cause no problem from the view point of the crush-proof characteristic.

Several advantages can be obtained by use of the method of the present invention.

First, because high-carbon low-alloy steel (0.5-1.0% carbon content by weight) is selected as the bushing material, a carburizing process can be eliminated in ensuring a necessary carbon content at surfaces of the bushing.

Second, because induction hardening is performed from an outside surface of a bushing material only, the induction hardening step is reduced to one half of that of the second related art.

Third, despite the elimination of the carburizing process and the reduction of the induction hardening step, strength and toughness of the bushing are maintained substantially equal to those of the bushings heat-treated according to the methods of the first through third related arts.

Fourth, though the hardness of core portions of bushings heat-treated according to the methods of the first through third related arts is less than the hardness of surface portions (about HRC 60), the hardness of the bushing heat-treated according to the method of the present invention is about HRC 60 throughout the entire wall including the core portion. As a result, abrasion resistance of the bushing produced according to the method of the present invention is conspicuously improved as compared with the bushings produced according to the methods of the first through third related arts.

## Claims

1. A production method for a vehicular endless track bushing comprising the steps of:
preparing a bushing material of high-carbon low-alloy steel including 0.5-1.0% carbon by weight;
induction-heating the bushing material from an outside surface of the bushing material only so that an inside surface of the bushing material is heated to a temperature above and close to a transformation temperature of the high carbon low-alloy steel;
cooling the bushing material from an outside' surface of the bushing material only so that an entire cross-section of a wall of the bushing material is quench-hardened; and
tempering the bushing material;
wherein the entire wall of the bushing material is hardened to a hardness of about HRC 60.

2. The method according to claim 1, wherein the high-carbon low-alloy steel includes 1.0-2.0% manganese by weight.

3. The method according to claim 1 or 2, wherein the high-carbon low-alloy steel includes 0.1- 1.2% chromium by weight.

4. The method according to any one of claims 1 to 3, wherein the high-carbon low-alloy steel includes less than 0.35% molybdenum by weight.

5. The method according to any one of claims 1 to 4, wherein the high-carbon low-alloy steel includes 0.0005-0.0030% boron by weight.

6. The method according to any one of claims 1 to 5, wherein the induction-heating is performed without pre-carburizing the bushing material before the induction-heating.

7. The method according to any one of claims 1 to 6, wherein the tempering is performed at 150°C - 250°C.

## Patentansprüche

1. Herstellungsverfahren für eine Buchse einer Fahrzeugraupenkette, folgende Schritte umfassend:
das Herstellung eines Buchsenmaterials aus niedriglegiertem, hochgekohltem Stahl, der 0,5-1,0 Gew.-% Kohlenstoff enthält;
Wirbelstromerwärmung des Buchsenmaterials nur von einer Außenfläche des Buchsenmaterials aus, sodaß eine Innenfläche des Buchsenmaterials auf eine Temperatur über und nahe einer Umwandlungstemperatur des niedriglegierten, hochgekohltem Strahl erwärmt wird;
Abkühlen des Buchsenmaterials nur von einer Außenfläche des Buchsenmaterials, sodaß ein gesamter Querschnitt einer Wand des Buchsenmaterials durch Abschrecken gehärtet wird; und
Anlassen des Buchsenmaterials;
worin die gesamte Wand des Buchsenmaterials auf eine Härte von etwa HRC 60 gehärtet wird.

2. Verfahren nach Anspruch 1, worin der niedriglegierte hochgekohlte Stahl 1,0-2,0 Gew.-% Mangan enthält.

3. Verfahren nach Anspruch 1 oder 2, worin der niedriglegierte, hochgekohlte Stahl 0,1-1,2 Gew.-% Chrom enthält.

4. Verfahren nach einem der Ansprüche 1 bis 3, worin der niedriglegierte, hochgekohlte Stahl weniger als 0,35 Gew.-% Molybdän enthält.

5. Verfahren nach einem der Ansprüche 1 bis 4, worin der niedriglegierte, hochgekohlte Stahl 0,0005-0,0030 Gew.-% Bor enthält.

6. Verfahren nach einem der Ansprüche 1 bis 5, worin die Wirbelstromerwärmung ohne Voraufkohlung des Buchsenmaterials vor der Wirbelstromerwärmung durchgeführt wird.

7. Verfahren nach einem der Ansprüche 1 bis 6, worin das Anlassen bei 150 - 250°C durchgeführt wird.

## Revendications

1. Procédé de fabrication d'une douille de chaîne à chenille de véhicule comprenant les étapes consistant à :
préparer un matériau de douille en acier dur faiblement allié comprenant 0,5-1,0 % de carbone en poids ;
chauffer par induction le matériau de douille à partir d'une surface externe uniquement du matériau de douille de sorte qu'une surface interne du matériau de douille est chauffée à une température au-dessus et proche d'une température de transformation de l'acier dur faiblement allié ;
refroidir le matériau de douille à partir d'une surface externe uniquement du matériau de douille de sorte qu'une section transversale entière d'une paroi du matériau de douille est durcie par trempe ; et
faire revenir le matériau de douille ;
dans lequel la paroi entière du matériau de douille est durcie à une dureté d'environ 60 HRC.

2. Procédé selon la revendication 1, dans lequel l'acier dur faiblement allié comprend 1,0-2,0 % de manganèse en poids.

3. Procédé selon la revendication 1 ou 2, dans lequel l'acier dur faiblement allié comprend 0,1-1,2 % de chrome en poids.

4. Procédé selon l'une des revendications 1 à 3, dans lequel l'acier dur faiblement allié comprend moins de 0,35 % de molybdène en poids.

5. Procédé selon l'une quelconque des revendications 1 à 4, dans lequel l'acier dur faiblement allié comprend 0,0005-0,0030 % de bore en poids.

6. Procédé selon l'une des revendications 1 à 5, dans lequel le chauffage par induction est réalisé sans précémenter le matériau de douille avant le chauffage par induction.

7. Procédé conformément à l'une des revendications 1 à 6, dans lequel le revenu est réalisé à 150°C-250°C.
